# EUROPEAN PATENT SPECIFICATION

(11) **EP 2 117 220 B1**
(45) Date of publication and mention of the grant of the patent: **05.03.2014**
(21) Application number: 07845893.2
(22) Date of filing: 11.12.2007
(51) Int. Cl.: H04M 3/58, H04L 29/06

(54) **A METHOD AND DEVICE FOR BLIND TRANSFER SERVICE**
VERFAHREN UND EINRICHTUNG FÜR BLINDTRANSFERDIENST
PROCÉDÉ ET DISPOSITIF POUR SERVICE DE TRANSFERT AVEUGLE

(30) Priority: 05.01.2007 CN 200710000511
(43) Date of publication of application: 11.11.2009
(73) Proprietor: ZTE Corporation, Shenzhen, Guangdong 518057 (CN)
(72) Inventor: SHEN, Min, Guangdong 518057 (CN); WANG, Zhisong, Guangdong 518057 (CN); SHEN, Chengnian, Guangdong 518057 (CN); LING, Wenjie, Guangdong 518057 (CN); ZHANG, Lu, Guangdong 518057 (CN)
(74) Representative: Ahner, Philippe
(86) International application number: PCT/CN2007/003537
(87) International publication number: WO 2008/086688

(56) References cited:
- WO-A1-2006/134034
- US-A1- 2004 176 084
- US-A1- 2006 159 251

## Description

### Field of the Invention

The present invention relates to communication field, in particular to a method and device for realizing blind transfer service in NGN(Next Generation Network).

### Background of the Invention

Call Transfer belongs to a supplementary service in communication system: after two users (user A and user B) establish a call in communication system, one user (taking user B as an example) can request to transfer the current call to a third user (user C), that is, establishing a call between user A and user C, and the call channel between user A and user B is disconnected. This service is commonly applied to this scene: a general manager's secretary (user B) answers all calls (user A) and makes clear the intentions of all the calls, and then uses call transfer service to transfer to the general manager calls that need to be answered by the general manager (user C) himself/herself.

There are two types of call transfer service: one is consultative transfer, i.e. user B establishes a call with user C before transfer (inquiring whether user C agrees to make call with user A), and then originates a transfer request to establish a call between user A and user C, and the two call channels between user B and user A and between user B and user C are disconnected respectively at the same time; the other is blind transfer, i.e. user B does not establish a call with user C first while directly originates the transfer request to establish a call between user A and user C.

In NGN with IMS ( IP Multimedia Subsystem ) as core, the call transfer service can be completed by an intelligent terminal of user, or by an intelligent terminal in cooperation with AS (Application Server) in network.

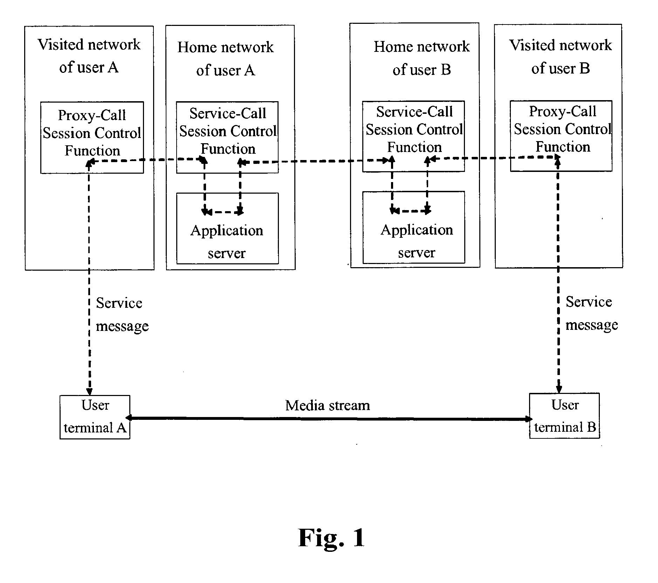

Figure 1 illustrates an architecture for realizing a typical service in NGN, wherein AS is connected with S-CSCF (Service-Call Session Control Function) in home network of user via an interface, service messages (represented with dotted line) between user terminal A and user terminal B will flow through their respective AS, and AS can conduct various processing on service messages to realize lots of services. User terminal A and user terminal B exchange and negotiate media parameters that they both support by the service messages, and media stream connection (represented with solid line) between them is established for transmitting data such as call voice packet.

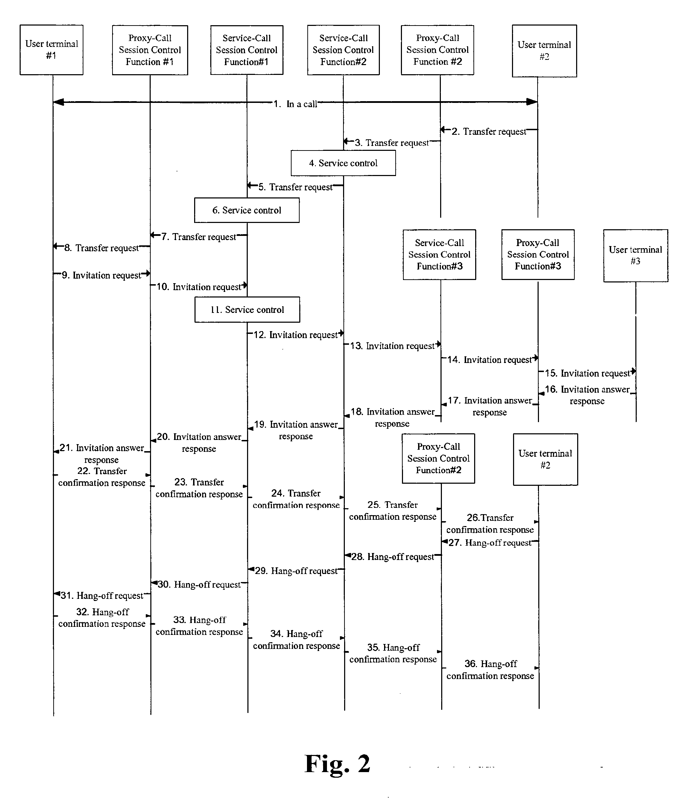

Figure 2 illustrates the call transfer (blind transfer) flow in the current 3GPP ( 3rd Generation partnership project ) technical specification. In this flow, a call is established between user terminal #1 (user A) and user terminal #2 (user B) firstly (step 1); then, user terminal #2 sends to user terminal #1 a transfer request which is transmitted to user terminal #1 via equipments (such as Proxy-Call Session Control Function, Service-Call Session Control Function) in network side (steps 2-8); after receiving the transfer request, user terminal #1 first sends an invitation request to user terminal #3 (user C), and an call connection is established between user terminal #1 and user terminal #3 (steps 9-21); subsequently, user terminal #1 sends a transfer confirmation response and notifies user terminal #2 of the result of successful transfer (steps 22-26) ; and finally, user terminal #2 sends a hang-off request to user terminal #1, and the call channel between user terminal #2 and user terminal #1 is disconnected (steps 27-36).

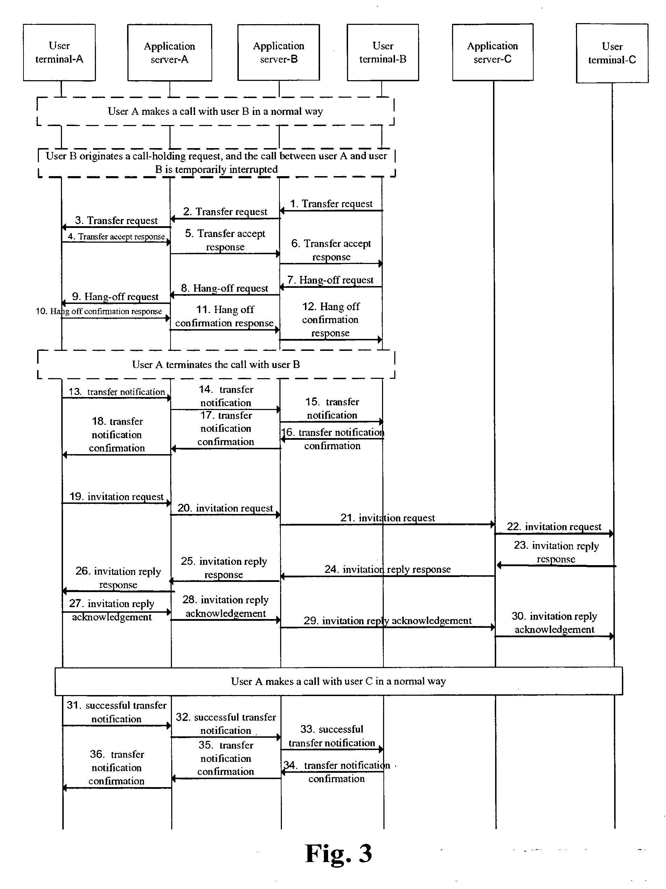

Figure 3 illustrates blind transfer flow in current TISPAN (Telecommunications and Internet Converged Services and Protocols for Advanced Networking) technical specification. To be simple, network equipments such as Proxy-Call Session Control Function and Service-Call Session Control Function are omitted in figure 3. At the beginning, user terminal-A (user A) is making a call with user terminal-B (user B), and an application server (application server A) of user terminal-A and an application server (application server B) of user terminal-B both participate in this call process and provide supplementary services for their respective served objects; then, user terminal-B sets user terminal-A in a call-holding state (i.e. service messages can be transmitted therebetween, but media stream is interrupted temporarily); then, user terminal-B sends to user terminal-A a transfer request (steps 1-3), and after user terminal-A shows the acceptance of this request (steps 4-6), user terminal-B sends a hang-off request to user terminal-A, and call channel between them is disconnected (steps 7-12) ; user terminal-A then sends an invitation request to user terminal-C (user C), and a call is established between user terminal-A and user terminal-C (steps 19-30); during the above process, before user terminal-A sends the invitation request to user terminal-C and when channel to user terminal-C is put through, a notification message is used to notify user terminal-B of relevant situations (corresponding to steps 13-18 and steps 31-36).

A common feature of the above two flows lies in that the call transfer request originated by user B is transmitted to user A via network, user A originates the call to the third user C, and during this process, user A reports the call transfer progress to user B originating the call transfer. However, this has the following problems:
(1) user terminal A must support processing on call transfer request, and needs to be able to correctly originate (including configuring various relevant parameters correctly) the call invitation request to user C and correctly report the call transfer progress to user B. The call transfer is the service of user B, and it is not reasonable to make too high requirements on user terminal A;
(2) In current flows, the time for user A to invite user C, the time for user A to report the call transfer progress to user B, and the time for user B to release the original call are completely determined by the terminals themselves, so that the call transfer service depends highly on the terminals. If the respective terminals abide by different specifications (for example, the times for user B to hang-off in the flows shown in figures 2 and 3 are different), it will render that users have different user experiences of the same service in the same network, which affecting users' satisfaction with service providers. Worse still, if the user terminals do not have fine cooperation therebetween, the service failure will be rendered, for example, if user terminal A does not report transfer success to user terminal B, user terminal B will not release the original call.

In general, realization of the call transfer service in the prior technique depends highly on user terminals, which has much limitation and hidden trouble. Hence, service providers hope to strengthen control over the call transfer service.

Directed to the blind transfer service in the call transfer service, this invention provides a service realization solution controlled by application server to solve the above problems, thereby reducing dependence on intelligent terminals and meeting demands of service providers.

Document WO 2006/134034 A1 discloses a method in which an IAM message, together with the ISUP protocol element continuity check on previous circuit are transmitted to the ISUP subscriber and the bearer connection is only established upon receipt of the SDP data from the A-side.

### Summary of the Invention

This invention intends to provide a method and device for realizing blind transfer service controlled by application server, to solve the problems in the service flows of the prior technique of highly dependence on user terminals and meet the control demand of service providers on call transfer service.

According to one aspect of this invention, a method for blind transfer service is provided, comprising the following steps: first, user A establishes a call with user B, then, user B originates a call transfer request to request to transfer the call with user A to user C; application server of user B heads off the request and returns an accept response to user B; the application server of user B firstly originates a call invitation to user C and acquires media parameter information of user C; the application server of user B originates a call re-invitation to user A, provides the media parameter information of user C, instructs user A to carry out media switch, and acquires media parameter information of user A; the application server of user B provides the media parameter information of user A to user C, and instructs user C to establish a media stream connection with user A.

The above blind transfer service method further comprises the following step: before originating the call transfer request, user B first originates call-holding, and temporarily interrupts media stream between user A and user B.

The above blind transfer service method further comprises the following step: after user C establishes the media stream connection with user A, the application server of user B reports to user B successful establishment of the call between user A and user C.

In the above blind transfer service method, the step that the application server of user B heads off this request and returns the accept response to user B further comprises the following step: judging whether user B is authorized to originate the call transfer according to service registration information of user B by the application server of user B, and if user B is not authorized, returning a refuse response to user B by the application server.

The above blind transfer service method further comprises the following step: after user C establishes the media stream connection with user A, instructing user B to hang off and ending the originally established call between user A and user B by the application server of user B.

According to another aspect of this invention, a device for blind transfer service is provided, comprising: a first module for establishing a call between user A and user B firstly, and then, making user B originate a call transfer request to request to transfer the call with user A to user C; a second module for making application server of user B head off the request and return an accept response to user B; a third module for making the application server of user B firstly originate a call invitation to user C and acquire media parameter information of user C; a fourth module for making the application server of user B originate a call re-invitation to user A, provide the media parameter information of user C, instruct user A to carry out media switch, and acquire media parameter information of user A; and a fifth module for making the application server of user B provide the media parameter information of user A to user C, and instruct user C to establish a media stream connection with user A.

Owing to the above mentioned, according to the solution of this invention, blind transfer service is realized by application server, and the times to invite a third party user, to report transfer progress to user, and to release the original call are controlled by the application server, and the transferred user terminal does not need to support the call transfer request, thereby the dependence of this service on user terminals is greatly reduced and thus the control demand of service providers on the call transfer service is fully met.

Other characteristics and advantages of the present invention will be described in the following specification, and will be apparent partly from the specification and embodiments of the present invention. The objects and other advantages can be realized and obtained through the structure particularly illustrated in the specification, claims, and the drawings.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Figure 1 illustrates the architecture for realizing a typical service in NGN;
Figure 2 is a flowchart of the call transfer (blind transfer) in current 3GPP technical specification;
Figure 3 is a flowchart of the blind transfer in current TISPAN technical specification;
Figure 4 is a flowchart of the blind transfer service method according to the embodiment of this invention; and
Figure 5 is a flowchart of blind transfer according to a preferred embodiment of this invention.

### Detailed Description of the preferred embodiments

The present invention will be detailed hereinafter in connection with the embodiments of the present invention with reference to the drawings.

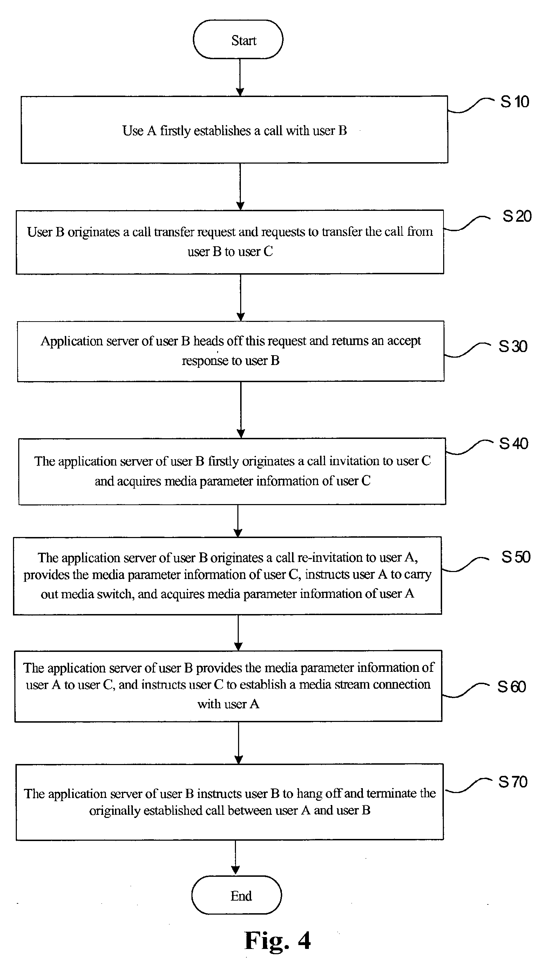

Figure 4 is a flowchart of the blind transfer service method according to the embodiment of this invention, comprising the following steps:
Step 10, use A firstly establishes a call with user B;
Step 20, user B originates a call transfer request and requests to transfer the call to user C;
Step 30, an application server of user B heads off this request and returns an accept response to user B;
Step 40, the application server of user B firstly originates a call invitation to user C and acquires media parameter information of user C;
Step 50, the application server of user B originates a call re-invitation to user A, provides the media parameter information of user C, instructs user A to carry out media switch, and acquires media parameter information of user A; and
Step 60, the application server of user B provides the media parameter information of user A to user C, and instructs user C to establish a media stream connection with user A.

In addition, the blind transfer service method can further include the following steps:
Step 70, after user C establishes the media stream connection with user A, the application server of user B instructs user B to hang off and terminate the originally established call between user A and user B.

Furthermore, the above method can further comprise the following step: before originating the call transfer request, user B firstly originates call-holding, and temporarily interrupts the media stream between user A and user B.

Furthermore, the above method can still further comprise the following step: after user C establishes the media stream connection with user A, the application server of user B reports to user B the successful establishment of the call between user A and user C.

Furthermore, the above method can yet further comprise the following step: before originating the call invitation to user C, the application server of user B reports to user B that the call transfer is in progress.

Furthermore, the above method can further have the following feature: in step 30, the application server of user B judges whether user B is authorized to originate the call transfer according to service registration information of user B, and if user B is not authorized, the application server returns a refuse response to user B.

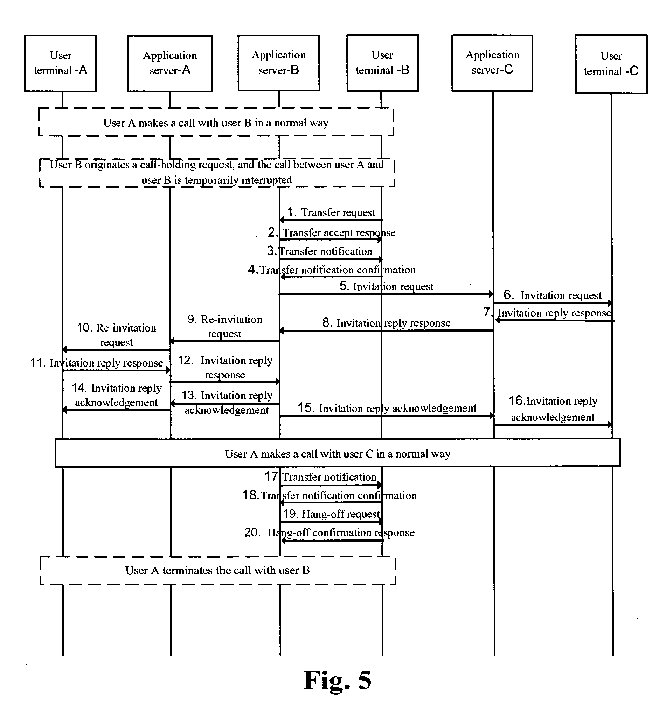

The present invention will be detailed hereinafter in conjunction with the preferred embodiment shown in figure 5.

Figure 5 is a flowchart of the improved blind transfer according to this invention (to be simple, network equipments such as Proxy-Call Session Control Function and Service-Call Session Control Function are omitted in figure 5). Compared with figure 3, main improvements are described as follows: the call transfer request sent by user terminal-B to user terminal-A is headed off by application server-B ( the application server which provides services for user B), and application server-B confirms accepting the transfer request to user terminal-B; then, application server-B sends an invitation request to user terminal-C, and after user terminal-C answers the invitation request, application server-B sends to user terminal-A a re-invitation request, modifies the media stream parameter information of user terminal-A, and conducts media switch, so that a call is established between user terminal-A and user terminal-C; and finally, the application server sends a hang-off request to user terminal-B, and disconnects the call connection between user terminal-A and user terminal-B. This embodiment includes the following steps:
1) By a certain operation, user B makes user terminal-B send a call transfer request to application serve-B to request to transfer the call to user C;
2) Application serve-B judges that the user is authorized to use call transfer service, and sends a call transfer accept response which shows that the request has been accepted;
3) Application serve-B sends to user B a transfer notification message which shows the preparation to originate a call to user C;
4) User B returns a confirmation response to application server-B;
5-6) Application server-B originates an invitation request to user C;
7-8) User terminal-C returns a successful reply response which carries the media parameter information it supports;
9-10) Application server-B sends to user terminal-A a re-invitation request, and provides the media parameter information of user terminal-C to user terminal-A for user terminal-A to conduct media stream switch;
11-12) User terminal-A returns a successful reply response which carries the media parameter information it supports;
13-14) Application server-B acknowledges the reply of the user terminal-A;
15-16) Application server-B acknowledges the reply of the user terminal-C, and provides the media parameter information of user terminal-A to user terminal-C for successfully establishing the media stream connection between user terminal-C and user terminal-A, and then user A can normally make a call with user C;
17) Application server-B sends a transfer notification message to user B, showing that the call between user A and user C has been established;
18) User B returns a confirmation response to application server-B;
19) Application server-B sends a hang-off request to user B;
20) User B returns a confirmation response to application server-B, and releases the original call with user A.

This invention further provides a device for blind transfer service, including: a first module for firstly establishing a call between user A and user B, and then making user B originate a call transfer request to request to transfer the call with user A to user C; a second module for making the application server of user B head off the call transfer request and return an accept response to user B; a third module for making the application server of user B firstly originate a call invitation to user C and acquire media parameter information of user C; a fourth module for making the application server of user B originate a call re-invitation to user A, provide the media parameter information of user C, instruct user A to carry out media switch, and acquire media parameter information of user A; and a fifth module for making the application server of user B provide the media parameter information of user A to user C, and instruct user C to establish a media stream connection with user A.

The above device for blind transfer service can further include a sixth module for making the application server of user B instruct user B to hang off and terminate the originally established call between user A and user B after user C establishes media stream connection with user A.

The above device for blind transfer service can still further include a seventh module for making user B firstly originate call-holding and temporarily interrupt media stream between user A and user B before user B originates the call transfer request.

The above device for blind transfer service can yet further include an eighth module for making the application server of user B report to user B successful establishment of the call between user A and user C after user C establishes the media stream connection with user A.

The above device for blind transfer service can yet further include a ninth module for making the application server of user B report to user B that the call transfer is in progress before originating the call invitation to user C.

In the above device for blind transfer service, the second module can further be used to make the application server of user B judge whether user B is authorized to originate the call transfer according to service registration information of user B, and if user B is not authorized, the application server returns a refuse response to user B.

Owing to the above mentioned, according to the solution of this invention, blind transfer service is realized by application server, and the times to invite a third party user, to report transfer progress to user, and to release the original call are controlled by the application server, and the transferred user terminal does not need to support the call transfer request, thereby the dependence of this service on user terminals is greatly reduced and thus the control demand of service providers on the call transfer service is fully met.

Obviously, one skilled in the art shall understand that various modules and steps above of the present invention can be realized with general computing devices and can be integrated into one single computing device or distributed within a network consisting of multiple computing devices, and alternatively, the various modules and steps above can be realized with the program codes executable by the computing devices, and thus these program codes can be stored in memory devices so as to be executed by the computing devices, or the various modules and steps above can be made into respective integrated circuit modules, or a plurality of the modules or steps therein can be made into a single integrated circuit module so as to be realized. Therefore, the present invention is not limited to any particular hardware or software combination.

The descriptions above are only preferable embodiments of the present invention and are not intended to restrict the present invention. For those skilled in the art, the present invention may have various changes and variations. Any amendments, equivalent substitutions, improvements etc. within the principle of the present invention are all included in the scope of protection of the present invention.

## Claims

1. A method for blind transfer service comprises the following steps :
establishing (10) a call between user A and user B firstly, and originating (20) a call transfer request by user B to request to transfer the call with user A from B to user C;
the method **characterized by** the following steps:
heading off (30) the request and returning an accept response to user B by the application server of user B;
originating a call invitation (40) to user C and acquiring media parameter information of user C by the application server of user B;
originating a call reinvitation (50) to user A, providing the media parameter information of user C, instructing user A to carry out media switch, and acquiring media parameter information of user A, by the application server of user B; and
providing (60) the media parameter information of user A to user C, and instructing (70) user C to establish a media stream connection with user A, by the application server of user B.

2. The method according to claim 1, further comprise the following step:
originating call-holding and temporarily interrupting media stream between user A and user B by user B before originating the call transfer request.

3. The method according to claim 1, further comprising the following step:
after the media stream connection between user C and user A is established, reporting to user B of successful call establishment between user A and user C by the application server of user B.

4. The method according to claim 1, wherein the step that heading off the request and returning an accept response to user B by the application server of user B further comprises the following step:
judging whether user B is authorized to originate the call transfer according to service registration information of user B by the application server of user B, and if user B is not authorized, returning a refuse response to user B by the application server of user B.

5. The method according to claim 1, further comprising the following step:
after the media stream connection between user C and user A is established, instructing user B to hang off and ending the originally established call between user A and user B by the application server of user B.

6. A device for blind transfer service comprises:
a first module for establishing a call between user A and user B, and making user B originate a call transfer request to request to transfer the call with user A from user B to user C; said device **characterized by** :
a second module for making the application server of user B head off the request and return an accept response to user B;
a third module for making the application server of user B originate a call invitation to user C and acquire media parameter information of user C;
a fourth module for making the application server of user B originate a call re-invitation to user A, provide the media parameter information of user C, and instruct user A to carry out media switch, and acquire media parameter information of user A; and
a fifth module for making the application server of user B provide the media parameter information of user A to user C, and instruct user C to establish a media stream connection with user A.

7. The device according to claim 6, further comprises:
a seventh module for making user B firstly originate call-holding and temporarily interrupt media stream between user A and user B before user B originates the call transfer request.

8. The device according to claim 6, further comprising:
an eighth module for making the application server of user B report to user B of successful call establishment between user A and user C after the media stream connection between user C and user A is established.

9. The device according to claim 6, wherein the second module can further be used to make the application server of user B judge whether user B is authorized to originate the call transfer according to service registration information of user B, and if user B is not authorized, make the application server return a refuse response to user B.

10. The device according to claim 6, further comprises:
a sixth module for making the application server of user B instruct user B to hang off and terminate the originally established call between user A and user B after the media stream connection between user C and user A is established.

## Patentansprüche

1. Verfahren für einen Blindtransferdienst, das die folgenden Schritte umfasst
zuerst Herstellen (10) eines Anrufs zwischen einem Teilnehmer A und einem Teilnehmer B und Hervorbringen (20) einer Anruftransferaufforderung durch den Teilnehmer B zum Auffordern des Transfers des Anrufs mit dem Teilnehmer A von B zum Teilnehmer C,
wobei das Verfahren durch die folgenden Schritte gekennzeichnet ist:
Abfangen (30) der Aufforderung und Zurücksenden einer Annahmeantwort an den Teilnehmer B durch den Anwendungsserver des Teilnehitiers B;
Hervorbringen einer Anrufeinladung (40) an den Teilnehmer C und Erfassen von Medienparameterinformationen des Teilnehmers C durch den Anwendungsserver des Teilnehmers B;
Hervorbringen einer Anrufwiedereinladung (50) an den Teilnehmer A, Bereitstellen der Medienparameterinformationen des Teilnehmers C, Anweisen des Teilnehmers A. die Medienumschaltung durchzuführen, und Erfassen von Medienparameterinformationen des Teilnehmers A durch den Anwendungsserver des Teilnehmers B, und
Bereitstellen (60) der Medienparameterinformationen des Teilnehmers A für den Teilnehmer C und Anweisen (70) des Teilnehmers C, eine Medienstromverbindung mit dem Teilnehmer A durch den Anwendungsserver des Teilnehmers B herzustellen.

2. Verfahren nach Anspruch 1, das ferner den folgenden Schritt umfasst:
Hervorbringen des Haltens des Anrufs und vorübergehendes Unterbrechen des Medienstroms zwischen dem Teilnehmer A und dem Teilnehmer B vor dem Hervorbringen der Anruftransferaufforderung.

3. Verfahren nach Anspruch 1, das ferner den folgenden Schritt umfasst:
nach dem Herstellen der Medienstromverbindung zwischen dem Teilnehmer C und dem Teilnehmer A, Berichten der erfolgreichen Anrufherstellung zwischen dem Teilnehmer A und dem Teilnehmer C durch den Anwendungsserver des Teilnehmers B an den Teilnehmer B

4. Verfahren nach Anspruch 1, wobei der Schritt des Abfangens der Aufforderung und des Zurücksendens einer Annahmeantwort an den Teilnehmer B durch den Anwendungsserver des Teilnehmers B ferner den folgenden Schritt umfasst
Entscheiden ob der Teilnehmer B gemäß den Dienstregistrierungsinformationen des Teilnehmers B berechtigt ist, den Anruftransfer hervorzubringen, durch den Anwendungsserver des Teilnehmers B und, wenn der Teilnehmer B nicht berechtigt ist, Zurücksenden einer Ablehnungsantwort an den Teilnehmer B durch den Anwendungsserver des Teilnehmers B

5. Verfahren nach Anspruch 1, das ferner den folgenden Schritt umfasst
nach dem Herstellen der Medienstromverbindung zwischen dem Teilnehmer C und dem Teilnehmers, Anweisen des Teilnehmers B, aufzuhängen und den ursprünglich hergestellten Anruf zwischen dem Teilnehmer A und dem Teilnehmer B durch den Anwendungsserver des Teilnehmers B zu beenden

6. Einrichtung für einen Blindtransterdienst, die Folgendes umfasst:
ein erstes Modul zum Herstellen eines Anrufs zwischen dem Teilnehmer A und dem Teilnehmer B und Bewirken, dass der Teilnehmer B eine Anruftransferaufforderung hervorbringt, um den Transfer des Anrufs mit dem Teilnehmer A vom Teilnehmer B zum Teilnehmer C zu transferieren wobei die Einrichtung durch Folgendes gekennzeichnet ist:
ein zweites Modul zum Bewirken, dass der Anwendungsserver des Teilnehmers B die Aufforderung auffängt und eine Annahmeantwort an den Teilnehmer B zurücksendet;
ein drittes Modul zum Bewirken, dass der Anwendungsserver des Teilnehmers B eine Anrufeiniadung an den Teilnehmer C hervorbringt und Medienparameterinformationen des Teilnehmers C erfasst;
ein viertes Modul zum Bewirken, dass der Anwendungsserver des Teilnehmers B eine Anrufwiedereinladung an den Teilnehmer A hervorbringt, die Medienparameterinformationen des Teilnehmers C bereitstellt und den Teilnehmer A anweist, die Medienumschaltung durchzuführen und Medienparameterinformationen des Teilnehmers A erfasst; und
ein fünftes Modul zum Bewirken, dass der Anwendungsserver des Teilnehmers B die Medienparameterinformationen des Teilnehmers A dem Teilnehmer C bereitstellt, und Anweisen des Teilnehmers C, eine Medienstromverbindung mit dem Teilnehmer A herzustellen.

7. Einrichtung nach Anspruch 6, die ferner Folgendes umfasst:
ein siebtes Modul zum Bewirken, dass der Teilnehmer B zuerst das Halten des Anrufs hervorbringt und den Medienstrorn zwischen dem Teilnehmer A und dem Teilnehmer B vorübergehend unterbricht, bevor der Teilnehmer B die Anruftransferaufforderung hervorbringt

8. Einrichtung nach Anspruch 6, die ferner Folgendes umfasst.
ein achtes Modul zum Bewirken, dass der Anwendungsserver des Teilnehmers B dem Teilnehmer B die erfolgreiche Anrufherstellung zwischen dem Teilnehmer A und dem Teilnehmer C berichtet nachdem die Medienstromverbindung zwischen dem Teilnehmer C und dem Teilnehmer A eingerichtet wurde

9. Einrichtung nach Anspruch 6, wobei das zweite Modul ferner verwendet werden kann, um zu bewirken, dass der Anwendungsserver des Teilnehmers B gemäß den Dienstregistrierungsinformationen des Teilnehmers B entscheidet, ob der Teilnehmer B zum Hervorbringen des Anruftransfers berechtigt ist, und wenn der Teilnehmer B nicht berechtigt ist, Bewirken, dass der Anwendungsserver eine Ablehnungsantwort an den Teilnehmer B zurücksendet

10. Einrichtung nach Anspruch 6 die ferner Folgendes umfasst
ein sechstes Modul zum Bewirken, dass der Anwendungsserver des Teilnehmers B den Teilnehmer B anweist, aufzuhängen und den ursprünglich hergestellten Anruf zwischen dem Teilnehmer A und dem Teifnehrner B zu beenden, nachdem die Medienstromverbindung zwischen dem Teilnehmer C und dem Teilnehmer A hergestellt wurde.

## Revendications

1. Procédé pour le service de transfert aveugle comprenant les étapes suivantes :
établir (10) un appel entre l'utilisateur A et l'utilisateur B tout d'abord, et émettre (20) une demande de transfert d'appel par l'utilisateur B pour demander de transférer l'appel avec l'utilisateur A de l'utilisateur B à l'utilisateur C ;
le procédé **caractérisé par** les étapes suivantes :
rediriger (30) la demande et renvoyer une réponse d'acceptation à l'utilisateur B par le serveur d'applications de l'utilisateur B ;
émettre une invitation d'appel (40) à l'utilisateur C et acquérir des informations de paramètre de média de l'utilisateur C par le serveur d'applications de l'utilisateur B ;
émettre une réinvitation d'appel (50) à l'utilisateur A, fournir des informations de paramètre de média de l'utilisateur C, donner à l'utilisateur A des instructions pour effectuer une commutation de média, et acquérir des informations de paramètre de média de l'utilisateur A, par le serveur d'applications de l'utilisateur B ; et
fournir (60) des informations de paramètre de média de l'utilisateur A à l'utilisateur C, et donner (70) à l'utilisateur C des instructions pour établir une connexion de flux de média avec l'utilisateur A, par le serveur d'applications de l'utilisateur B.

2. Procédé selon la revendication 1, comprenant en outre l'étape suivante :
émettre une mise en attente d'appel et interrompre temporairement le flux de média entre l'utilisateur A et l'utilisateur B par l'utilisateur B avant l'émission de la demande de transfert d'appel.

3. Procédé selon la revendication 1, comprenant en outre l'étape suivante :
après que la connexion de flux de média entre l'utilisateur C et l'utilisateur A est établie, transmettre le rapport à l'utilisateur B de l'établissement d'appel réussi entre l'utilisateur A et l'utilisateur C par le serveur d'applications de l'utilisateur B.

4. Procédé selon la revendication 1, dans lequel l'étape consistant à rediriger la demande et à renvoyer une réponse d'acceptation à l'utilisateur B par le serveur d'applications de l'utilisateur B comprend en outre l'étape suivante :
juger si l'utilisateur B est autorisé à émettre le transfert d'appel selon des informations d'enregistrement de service de l'utilisateur B par le serveur d'applications de l'utilisateur B, et si l'utilisateur B n'est pas autorisé, renvoyer une réponse de refus à l'utilisateur B par le serveur d'applications de l'utilisateur B.

5. Procédé selon la revendication 1, comprenant en outre l'étape suivante :
après que la connexion de flux de média entre l'utilisateur C et l'utilisateur A est établie, donner à l'utilisateur B instruction de raccrocher et mettre fin à l'appel établi à l'origine entre l'utilisateur A et l'utilisateur B par le serveur d'applications de l'utilisateur B.

6. Dispositif pour le service de transfert aveugle comprenant :
un premier module pour établir un appel entre l'utilisateur A et l'utilisateur B, et amener l'utilisateur B à émettre une demande de transfert d'appel pour demander de transférer l'appel avec l'utilisateur A de l'utilisateur B à l'utilisateur C ; ledit dispositif **caractérisé par** :
un deuxième module pour amener le serveur d'applications de l'utilisateur B à rediriger la demande et renvoyer une réponse d'acceptation à l'utilisateur B ;
un troisième module pour amener le serveur d'applications de l'utilisateur B à émettre une invitation d'appel à l'utilisateur C et acquérir des informations de paramètre de média de l'utilisateur C ;
un quatrième module pour amener le serveur d'applications de l'utilisateur B à émettre une réinvitation d'appel à l'utilisateur A, fournir les informations de paramètre de média de l'utilisateur C, et donner pour instruction à l'utilisateur A d'effectuer une commutation de média, et acquérir des informations de paramètre de média de l'utilisateur A ; et
un cinquième module pour amener le serveur d'applications de l'utilisateur B à fournir les informations de paramètre de média de l'utilisateur A à l'utilisateur C, et donner pour instruction à l'utilisateur C d'établir une connexion de flux de média avec l'utilisateur A.

7. Dispositif selon la revendication 6, comprenant en outre :
un septième module pour amener l'utilisateur B à émettre tout d'abord une mise en attente d'appel et interrompre temporairement le flux de média entre l'utilisateur A et l'utilisateur B avant que l'utilisateur B n'émette la demande de transfert d'appel.

8. Dispositif selon la revendication 6, comprenant en outre :
un huitième module pour amener le serveur d'applications de l'utilisateur B à rapporter à l'utilisateur B l'établissement d'appel réussi entre l'utilisateur A et l'utilisateur C après que la connexion de flux de média entre l'utilisateur C et l'utilisateur A est établie.

9. Dispositif selon la revendication 6, dans lequel le deuxième module peut en outre être utilisé pour amener le serveur d'applications de l'utilisateur B à juger si l'utilisateur B est autorisé à émettre le transfert d'appel selon des informations d'enregistrement de service de l'utilisateur B, et si l'utilisateur B n'est pas autorisé, amener le serveur d'applications à renvoyer une réponse de refus à l'utilisateur B.

10. Dispositif selon la revendication 6, comprenant en outre :
un sixième module pour amener le serveur d'applications de l'utilisateur B à donner pour instruction à l'utilisateur B de raccrocher et mettre fin à l'appel établi à l'origine entre l'utilisateur A et l'utilisateur B après la que connexion de flux de média entre l'utilisateur C et l'utilisateur A est établie.
